# EUROPÄISCHE PATENTSCHRIFT

(11) **EP 1 574 284 B1**
(45) Veröffentlichungstag und Bekanntmachung des Hinweises auf die Patenterteilung: **24.05.2006**
(21) Anmeldenummer: 04400013.1
(22) Anmeldetag: 01.03.2004
(51) Int. Cl.: B23Q 1/58, B23Q 5/38

(54) **Linearantrieb**
Linear actuator
Actionneur linéaire

(43) Veröffentlichungstag der Anmeldung: 14.09.2005
(73) Patentinhaber: FESTO AG & Co, 73734 Esslingen (DE)
(72) Erfinder: Angué, Eric, 70806 Kornwestheim (DE); Kopp, Simone, 73734 Esslingen (DE); Diener, Ulrich, 73732 Esslingen (DE)
(74) Vertreter: Abel, Martin

(56) Entgegenhaltungen:
- EP-B- 0 603 459

## Beschreibung

Die Erfindung betrifft einen Linearantrieb, mit einem Antriebsgehäuse und einem diesbezüglich in Richtung einer Hauptachse verstellbar geführten Schlitten, wobei der Schlitten mit wenigstens einem Teil seiner Länge in Richtung einer Hochachse neben dem Antriebsgehäuse angeordnet ist und mindestens eine lineare schlittenseitige Durchbrechungsreihe mit in Richtung der Hauptachse zueinander beabstandeten ersten Schlittendurchbrechungen aufweist, und wobei das Antriebsgehäuse mindestens eine lineare gehäuseseitige Durchbrechungsreihe mit in Richtung der Hauptachse zueinander beabstandeten ersten Gehäusedurchbrechungen aufweist, die durch entsprechende Positionierung des Schlittens so in eine in der Richtung der Hochachse mit jeweils einer ersten Schlittendurchbrechung fluchtende Montageposition bringbar sind, dass zur Befestigung des Linearantriebes dienende Befestigungsschrauben vollständig durch die ersten Schlittendurchbrechungen hindurchführbar und in die ersten Gehäusedurchbrechungen einsetzbar sind.

Ein aus der EP 0603459 B2 bekannter Linearantrieb dieser Art verfügt über ein Antriebsgehäuse, das von mehreren, als Gewindebohrungen ausgeführten ersten Gehäusedurchbrechungen durchsetzt ist und an dem ein Schlitten verschiebbar geführt ist, der über gewindelose erste Schlittendurchbrechungen verfügt. In beiden Fällen sind die Durchbrechungen in Richtung einer mit der Hubrichtung des Schlittens verlaufenden Hauptachse ausgerichtet und können durch entsprechende Positionierung des Schlittens in eine in Richtung der Hochachse fluchtende Montageposition verbracht werden. Soll der Linearantrieb auf einer Unterlage befestigt werden, besteht die theoretische Möglichkeit, Befestigungsschrauben einzusetzen, deren Schaft einen geringeren Gewindedurchmesser besitzt als die ersten Gehäusedurchbrechungen, sodass sie jeweils von der Schlittenseite her vollständig durch die ersten Schlittendurchbrechungen hindurchgeführt und anschließend ohne Gewindeeingriff durch die ersten Gehäusedurchbrechungen hindurchsteckbar sind. Die Unterlage verfügt dann an die Befestigungsschrauben angepasste Gewindebohrungen, sodass sich das Antriebsgehäuse festschrauben lässt. Alternativ besteht auch die Möglichkeit, das Antriebsgehäuse in einer Weise an einer Unterlage zu fixieren, bei der die Befestigungsschrauben von der Seite der Unterlage her durch diese hindurch eingebracht und mit den ersten Gehäusedurchbrechungen verschraubt werden. In diesem Fall hat man allerdings auf Befestigungsschrauben mit einem entsprechend größeren Gewindedurchmesser zurückzugreifen.

Sollen zwei Linearantriebe huckepackartig aneinander befestigt werden, wobei das Antriebsgehäuse des einen Linearantriebes auf dem Schlitten des anderen Linearantriebes fixiert wird, hat man beim Stand der Technik auf eine nicht näher beschriebene Adapterplatte zurückzugreifen. Diese lässt sich unter Verwendung zusätzlicher Gewindebohrungen des Schlittenteils fixieren, die außerhalb der schlittenseitigen Durchbrechungsreihe angeordnet sind (Fig. 6 der EP 0603459 B2), wobei dann die Adapterplatte wiederum ein Gewindelochmuster bereitstellen muss, das an die Verteilung der ersten Gehäusedurchbrechungen des anzusetzenden Antriebsgehäuses angepasst ist. All dies ist mit einem relativ hohen Aufwand verbunden, sei es in konstruktiver Hinsicht als auch bei der funktionsgerechten Installation eines oder mehrerer Linearantriebe.

Es ist die Aufgabe der vorliegenden Erfindung, einen Linearantrieb zu schaffen, der flexible und einfache Montagemöglichkeiten bietet.

Zur Lösung dieser Aufgabe ist vorgesehen, dass die schlittenseitige Durchbrechungsreihe zusätzlich zu den ersten Schlittendurchbrechungen als Gewindebohrungen ausgebildete zweite Schlittendurchbrechungen aufweist, die das Einschrauben von Befestigungsschrauben ermöglichen, welche in die ersten Gehäusedurchbrechungen eines mit seinem Antriebsgehäuse voraus huckepackartig direkt an den Schlitten angesetzten weiteren gleichartigen Linearantriebes durch dessen erste Schlittendurchbrechungen hindurch eingesetzt sind.

Mithin findet sich am Schlitten eine Durchbrechungsreihe, in der in Richtung der Hauptachse linear aufgereiht sowohl für das komplette Hindurchführen von Befestigungsschrauben vorgesehene erste Schlittendurchbrechungen als auch die Gewindemontage von Befestigungsschrauben ermöglichende zweite Schlittendurchbrechungen vorgesehen sind. Dadurch wird insbesondere die Möglichkeit eröffnet, zwei gleichartige Linearantriebe huckepackartig aneinander zu fixieren, und zwar durch direktes Anschrauben des Antriebsgehäuses des einen Linearantriebes an den Schlitten des anderen Linearantriebes unter Verzicht auf die bisher übliche Adapterplatte. Eine durch eine erste Gehäusedurchbrechung des Antriebsgehäuses durchgesteckte Befestigungsschraube kann unmittelbar mit einer der als Gewindebohrungen ausgebildeten zweiten Schlittendurchbrechungen des benachbarten Schlittens verschraubt werden. Gleichwohl besteht die Möglichkeit, die ersten Gehäusedurchbrechungen weiterhin zur Fixierung des Linearantriebes an einer beliebigen anderen Unterlage einzusetzen, beispielsweise an einer zu einer Maschine gehörenden Befestigungsplatte.

Vorteilhafte Weiterbildungen der Erfindung gehen aus den Unteransprüchen hervor.

Da die ersten Schlittendurchbrechungen lediglich den Zweck haben, das komplette Hindurchführen von Befestigungsschrauben zu ermöglichen, können sie komplett gewindelos ausgebildet sein.

Um stabile Verbindungen herstellen zu können, empfiehlt es sich, die ersten und zweiten Schlittendurchbrechungen gruppenweise alternierend aufeinanderfolgend anzuordnen, sodass sich bei einer Befestigung jeweils mehrere zweite Schlittendurchbrechungen einer oder mehrerer Durchbrechungsgruppen einsetzen lassen. Besonders empfehlenswert ist eine paarweise abwechselnde Aufeinanderfolge erster und zweiter Schlittendurchbrechungen.

Die Zusammenfassung wenigstens zweier erster Schlittendurchbrechungen auf einem relativ kurzen Längenabschnitt der gehäuseseitigen Durchbrechungsreihe hat vor allem dann Vorteile, wenn die Möglichkeit geschaffen werden soll, den Linearantrieb in rechtwinkeliger Ausrichtung stirnseitig an einem Kopfstück des Schlittens eines anderen Linearantriebes zu befestigen, um ein zweiachsiges x-y-Bewegungssystem aufzubauen.

Bei einer zweckmäßigen Ausgestaltung des Linearantriebes sind die ersten Gehäusedurchbrechungen als Gewindebohrungen ausgebildet, deren Gewindedurchmesser wenigstens so groß ist, dass sich ohne Gewindeeingriff der Gewindeschaft einer Befestigungsschraube hindurchstecken lässt, dessen Gewindedurchmesser demjenigen der zweiten Schlittendurchbrechungen entspricht. Soll ein Linearantrieb von der Schlittenseite her an einer Unterlage - beispielsweise eine Befestigungsplatte oder der Schlitten eines weiteren Linearantriebes - fixiert werden, kann man somit Befestigungsschrauben verwenden, die mit ihrem Gewindeschaft durch die ersten Gehäusedurchbrechungen hindurchgesteckt werden können, um sie in ein Gewinde der Unterlage einzuschrauben. Soll hingegen eine Befestigung von der Seite der Unterlage her stattfinden, greift man auf Befestigungsschrauben zurück, deren Gewindedurchmesser demjenigen der ersten Gehäusedurchbrechungen entspricht, sodass sie von der dem Schlitten entgegengesetzten Seite her in die ersten Gehäusedurchbrechungen eingeschraubt werden können.

Während bei dieser Bauform zur Realisierung der verschiedenen Montagevarianten auf Befestigungsschrauben mit zwei unterschiedlichen Gewindegrößen zurückgegriffen werden muss, lassen sich bei einer bevorzugten anderen Weiterbildung der Erfindung alle Montagemaßnahmen mit Befestigungsschrauben derselben Gewindegröße bewältigen. Hierzu sind innerhalb der gehäuseseitigen Durchbrechungsreihe zusätzlich zu den ersten Gehäusedurchbrechungen zweite Gehäusedurchbrechungen vorgesehen, die als Gewindebohrungen ausgebildet sind und deren Gewindedurchmesser demjenigen der zweiten Schlittendurchbrechungen entspricht. Gleichzeitig ist der Durchmesser der ersten Gehäusedurchbrechungen so groß gewählt, dass der Gewindeschaft einer Befestigungsschraube, dessen Gewindedurchmesser demjenigen der zweiten Gehäusedurchbrechung entspricht, ohne weiteres durchsteckbar ist. Die ersten Gehäusedurchbrechungen können hierbei ohne weiteres gewindelos ausgebildet sein.

Um in diesem Fall einen Linearantrieb von der Seite einer Unterlage her an dieser Unterlage festzuschrauben, kann man auf Befestigungsschrauben zurückgreifen, die man von der Rückseite her durch die Unterlage hindurchführt und in die zweiten Gehäusedurchbrechungen einschraubt. Die gleichen Befestigungsschrauben kann man aber auch für Schraubbefestigungen von der Schlittenseite her verwenden, da in diesem Falle die Gewindeschäfte ohne weiteres durch die entsprechend größeren ersten Gehäusedurchbrechungen hindurchgeführt werden können. Zur Realisierung einer Huckepacklösung können dann diese durch die ersten Gehäusedurchbrechungen hindurchgesteckten Gewindeschäfte ohne weiteres in die zweiten Schlittendurchbrechungen eingeschraubt werden, deren Gewindedurchmesser demjenigen des Gewindeschafts der Befestigungsschrauben entspricht.

Um einen Linearantrieb mit präziser Ausrichtung an einer Unterlage fixieren zu können, sind zweckmäßigerweise sowohl die zweiten Schlittendurchbrechungen als auch die ersten Gehäusedurchbrechungen, sowie gegebenenfalls auch die zweiten Gehäusedurchbrechungen, im Bereich ihrer äußeren Stirnseiten mit einer konzentrischen Zentriererweiterung versehen, in die sich eine Zentrierhülse einstecken lässt, die dann im aneinander angesetzten Zustand beispielsweise zweier Linearantriebe gleichzeitig in die Zentriererweiterungen miteinander fluchtender Durchbrechungen eingreift und dadurch die Antriebskomponenten präzise zentriert.

Der mit dem erfindungsgemäßen Montagesystem ausgestattete Linearantrieb kann sowohl in fluidisch als auch in elektrisch betätigbarer Bauweise realisiert sein.

Nachfolgend wird die Erfindung anhand der beiliegenden Zeichnung näher erläutert. In dieser zeigen:
- Fig. 1: eine bevorzugte Bauform des erfindungsgemäßen Linearantriebes in perspektivischer Rückansicht im eingefahrenen Zustand des Schlittens,
- Fig. 2: den Linearantrieb aus Fig. 1 in einem ausgefahrenen Zustand des Schlittens,
- Fig. 3: einen Längsschnitt durch den Linearantrieb in der aus Fig. 2 hervorgehenden ausgefahrenen Schlittenposition und gemäß Schnittlinie III-III aus Fig. 2,
- Fig. 4 und 5: den Linearantrieb der Fig. 1 bis 3 in auf unterschiedliche Weise an einer Unterlage montierten Zu- ständen im Längsschnitt gemäß Schnittlinie IV-IV aus Fig. 1,
- Fig. 6 bis 8: verschiedene, unter gegenseitiger Montage mehrerer Linearantriebe erzielbarer Baugruppen im Längsschnitt analog Schnittlinie IV-IV aus Fig. 1,
- Fig. 9 und 10: unterschiedliche Arten der Montage eines Linearantriebes, dessen Bauform abgesehen von einer Abweichung im Aufbau des Antriebsgehäuses demjenigen der Fig. 1 bis 3 entspricht, und
- Fig. 11 bis 13: unter Verwendung von Linearantrieben der in Fig. 9 und 10 gezeigten Art zusammengestellte Linearantriebs-Baugruppen in unterschiedlichen Konfigurationen.

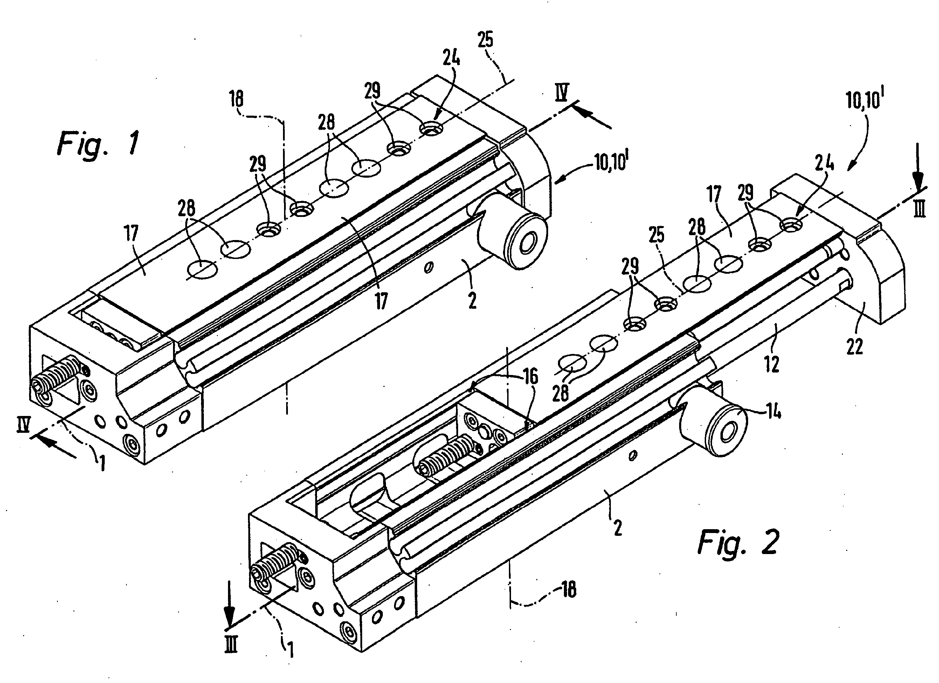

Wie insbesondere aus Fig. 1 bis 3 ersichtlich ist, verfügen die Linearantriebe des Ausführungsbeispiels über eine längliche Gestalt mit einer dem Verlauf der Längsachse folgenden Hauptachse 1. Als Basis des Linearantriebes ist ein Antriebsgehäuse 2 vorgesehen, das in seinem Innern einen längsverlaufenden Antriebsraum 3 definiert, in dem sich zu einer Linearbewegung antreibbare Antriebsmittel 4 befinden. Die Antriebsmittel 4 bestehen beim Ausführungsbeispiel aus einem Kolben, der den Antriebsraum 3 unter Abdichtung axial in zwei Arbeitskammern 5, 6 unterteilt, die jeweils mit einem in der Wandung des Antriebsgehäuses 2 verlaufenden Fluidkanal 7, 8 kommunizieren, der zur Außenfläche ausmündet. Durch gesteuerte Einspeisung und Abfuhr eines fluidischen Druckmediums, beispielsweise Druckluft, in die bzw. aus den Arbeitskammern 5, 6 kann der Kolben 4 zu einer Linearbewegung relativ zum Antriebsgehäuse 2 angetrieben werden, die über eine an dem Kolben 4 angreifende Kolbenstange 12 nach außen übertragen wird.

Die Kolbenstange 12 durchsetzt unter Abdichtung eine den Antriebsraum 3 einenends begrenzende vordere Abschlusswand 13, die zweckmäßigerweise stopfenartig in den Antriebsraum 3 eingesetzt und mit dem Antriebsgehäuse 2 verstiftet ist.

Axial außen im Anschluss an die vordere Abschlusswand 13 kann sich eine patronenartig in eine Ausnehmung des Antriebsgehäuses 2 eingesetzte Klemmeinheit 14 befinden, die ebenfalls von der Kolbenstange 12 durchsetzt wird und die durch Fluidkraft aktivierbar ist, um die Kolbenstange 12 an beliebiger Stelle gehäusefest zu blockieren. Den rückseitigen Abschluss des Antriebsraumes 3 bildet beim Ausführungsbeispiel ein rückseitig am Antriebsgehäuse 2 angeordneter Abschlussdeckel 15.

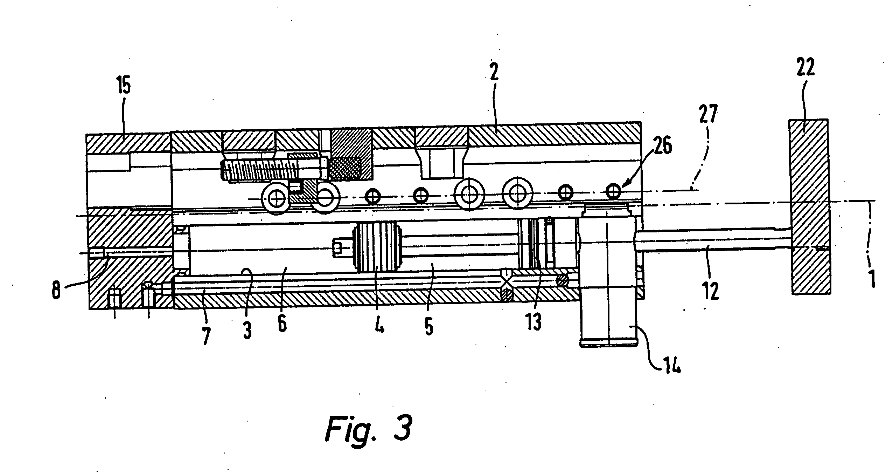

Außen am Antriebsgehäuse 2 ist unter Vermittlung einer sich aus insbesondere zwei Führungseinheiten zusammensetzenden Linearführungseinrichtungen 16 ein Schlitten 17 in Richtung der Hauptachse 1 verschiebbar geführt. Dieser Schlitten 17 liegt in Richtung einer zur Hauptachse 1 rechtwinkeligen Hochachse 18 neben dem Antriebsgehäuse 2, das er entsprechend seiner momentanen Schlittenposition über einen mehr oder weniger großen Teil seiner Länge axial überlappt. In dem aus Fig. 1 ersichtlichen eingefahrenen Zustand liegt der Schlitten über praktisch seine gesamte Länge längsseits neben dem Antriebsgehäuse 2. Im ausgefahrenen Zustand vergleichbar den Fig. 2 und 3 ragt er mit seinem vorderen Endabschnitt über die vordere Stirnfläche des Antriebsgehäuses 2 hinaus.

Die Linearbewegung des Schlittens 17 wird durch die Antriebsmittel 4 verursacht, die über die Kolbenstange 12 mit dem Schlitten 17 antriebsmäßig gekoppelt sind. Beim Ausführungsbeispiel verfügt der Schlitten 17 am vorderen Endbereich über ein vor das Antriebsgehäuse 2 ragendes Verbindungsjoch 22, an dem die Kolbenstange 12 mit ihrem äußeren Endabschnitt befestigt ist.

An dem Schlitten 17 kann eine zu bewegende Last fixiert werden, beispielsweise eine Maschinenkomponente, ein Greifer oder gar ein weiterer Linearantrieb, wenn mehrere Linearantriebe zu einer Baugruppe zusammengefasst werden sollen.

Der Linearantrieb kann bei Bedarf auch in kolbenstangenloser Bauweise ausgeführt werden, beispielsweise nach Art eines sogenannte Schlitzzylinders, bei dem die Antriebskraft zwischen den Antriebsmitteln 4 und dem Schlitten 17 durch einen Mitnehmer übertragen wird, der einen in den Antriebsraum 3 einmündenden Längsschlitz durchsetzt. Auch eine berührungslose Magnetkopplung zwischen den Antriebsmitteln 4 und dem Schlitten 17 wäre möglich. Des Weiteren könnten die Antriebsmittel 4 auch Bestandteil einer elektrischen Antriebskomponente sein, beispielsweise eines elektrodynamischen Lineardirektantriebes oder eines elektrisch betätigbaren Spindelantriebes.

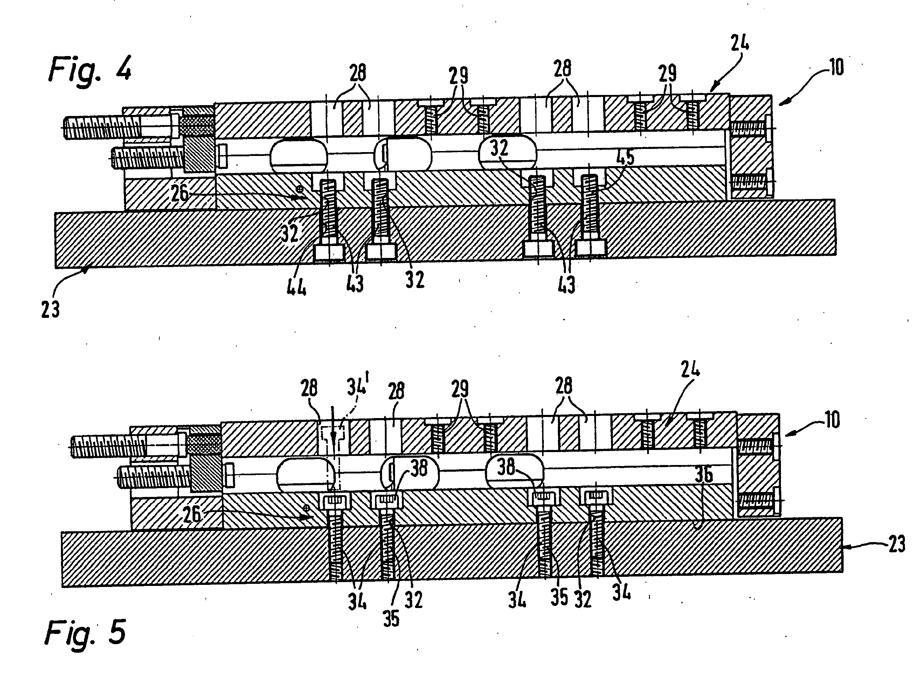

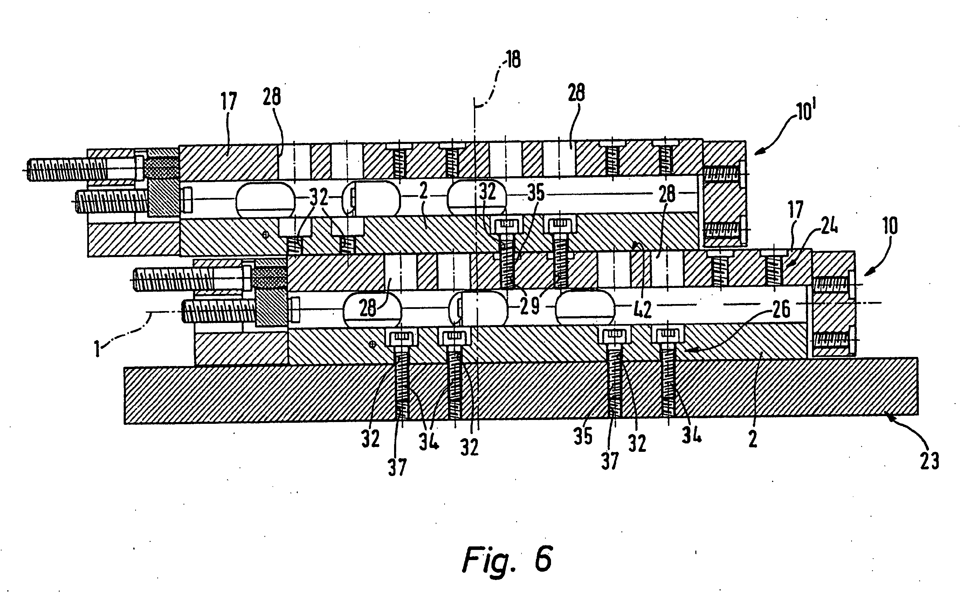

Der Linearantrieb ist mit Maßnahmen ausgestattet, die eine Schraubbefestigung sowohl des Antriebsgehäuses 2 als auch des Schlittens 17 an einer anderen Komponente ermöglichen. Exemplarisch zeigen die Fig. 4 und 5 sowie 9 und 10 jeweils einen unter Einsatz dieser Maßnahmen an einer als Befestigungsplatte 23 ausgebildeten Unterlage befestigten Linearantrieb 10, dessen grundsätzlicher Aufbau dem in Fig. 1 bis 3 beschriebenen entspricht. Die Fig. 6 bis 8 sowie 11 bis 13 zeigen weitere mögliche Montagekombinationen, bei denen an den an einer Befestigungsplatte 23 montierten Linearantrieb 10 seinerseits ein weiterer Linearantrieb 10' angebaut ist.

Die nachfolgenden Ausführungen gelten stellvertretend für sämtliche der abgebildeten Linearantriebe 10, 10', sofern nicht im Einzelnen anderslautende Erläuterungen vorgenommen werden.

An dem Schlitten 17 ist eine lineare Reihe von Durchbrechungen vorgesehen, die als schlittenseitige Durchbrechungsreihe 24 bezeichnet sei. Ihre in Fig. 1 und 2 strichpunktiert angedeutete Reihenrichtung 25 verläuft parallel zu der Hauptachse 1.

In Richtung der Hochachse 18 gegenüberliegend zur schlittenseitigen Durchbrechungsreihe 24 findet sich eine als gehäuseseitige Durchbrechungsreihe 26 bezeichnete Reihe gehäuseseitiger Durchbrechungen, wobei die in Fig. 3 ebenfalls strichpunktiert angedeutete Reihenrichtung 27 der gehäuseseitigen Durchbrechungsreihe 26 ebenfalls parallel zur Hauptachse 1 verläuft.

Die schlittenseitige Durchbrechungsreihe 24 enthält in der Reihenrichtung 25 mit Abstand aufeinanderfolgend angeordnete erste Schlittendurchbrechungen 28 und zweite Schlittendurchbrechungen 29. Diese sind zweckmäßigerweise gruppenweise alternierend aufeinanderfolgend angeordnet, wobei die Durchbrechungen zweckmäßigerweise paarweise zusammengefasst sind, sodass wie abgebildet in der Reihenrichtung 25 abwechselnd jeweils zwei aufeinanderfolgende erste und zweite Schlittendurchbrechungen 28, 29 vorgesehen sind.

Die ersten Schlittendurchbrechungen 28 haben keine Befestigungsfunktion und können daher gewindelos ausgebildet sein. Die zweiten Schlittendurchbrechungen 29 hingegen sind als Gewindebohrungen ausgebildet und enthalten ein das Einschrauben von Befestigungsschrauben ermöglichendes Innengewinde.

Die gehäuseseitige Durchbrechungsreihe 26 verfügt über mehrere, in der Reihenrichtung 27 mit Abstand aufeinanderfolgend angeordnete erste Gehäusedurchbrechungen 32. Diese sind, wie die Schlittendurchbrechungen 28, 29, in Richtung der Hochachse 18 ausgerichtet. Da zudem die beiden Durchbrechungsreihen 24, 26 mit Bezug auf die Hochachse 18 fluchten, ist es möglich, durch Verschieben des Schlittens 17 die ersten Schlittendurchbrechungen 28 in eine in Richtung der Hochachse 17 mit jeweils einer ersten Schlittendurchbrechung 28 fluchtende Montageposition zu bringen. Mit anderen Worten ergibt sich eine koaxiale Anordnung der Längsachsen der miteinander fluchtenden Durchbrechungen des Schlittens 17 und des Antriebsgehäuses 2.

Zweckmäßigerweise sind die Durchbrechungen so angeordnet, dass sich mindestens eine Schlittenposition ergibt, bei der sämtliche ersten Schlittendurchbrechungen 28 mit jeweils einer ersten Gehäusedurchbrechung 32 fluchten. Bei den Ausführungsbeispielen ist dies die vollständig eingefahrene Position des Schlittens 17, die aus Fig. 1 sowie aus den Fig. 4 bis 13 ersichtlich ist.

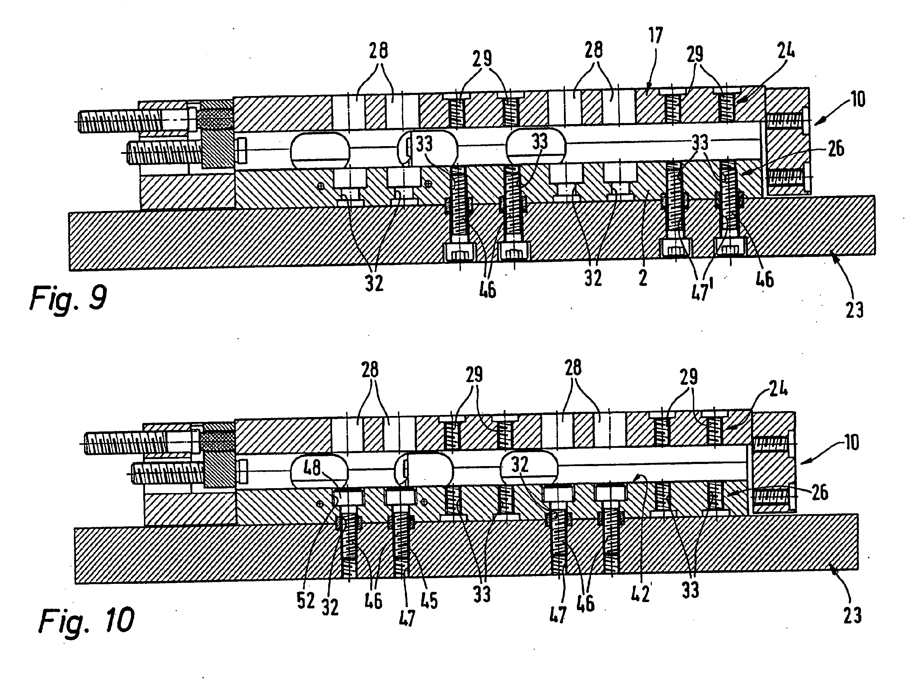

Während beim Ausführungsbeispiel der Fig. 4 bis 8 die gehäuseseitige Durchbrechungsreihe 26 ausschließlich aus ersten Gehäusedurchbrechungen 32 besteht, beinhaltet die gehäuseseitige Durchbrechungsreihe 26 bei den Ausführungsbeispielen der Fig. 9 bis 13 zusätzlich noch zweite Gehäusedurchbrechungen 33. Vergleichbar den ersten und zweiten Schlittendurchbrechungen ist auch bei den ersten und zweiten Gehäusedurchbrechungen 32, 33 eine gruppenweise und insbesondere paarweise abwechselnde Anordnung in der Reihenrichtung 27 vorgesehen. Es empfiehlt sich insbesondere eine Ausführung, bei der in derjenigen Stellung, in der die ersten Schlittendurchbrechungen 28 mit den ersten Gehäusedurchbrechungen 32 fluchten, auch die zweiten Schlittendurchbrechungen 29 und die zweiten Gehäusedurchbrechungen 33 jeweils paarweise auf einer gemeinsamen, in Richtung der Hochachse 18 verlaufenden Linie liegen.

Bei dem Ausführungsbeispiel der Fig. 4 bis 8 sind die ersten Gehäusedurchbrechungen 32 als Gewindebohrungen ausgebildet, deren Gewindedurchmesser so groß ist, dass sich eine erste Befestigungsschraube 34 mit ihrem Gewindeschaft 35 ohne Gewindeeingriff hindurchstecken lässt, wobei der Gewindedurchmesser dieses Gewindeschaftes 35 demjenigen der zweiten Schlittendurchbrechungen 29 entspricht. Die Gewindegröße des Gewindeschaftes 35 ist also mit derjenigen der zweiten Schlittendurchbrechungen 29 identisch und entspricht beim Ausführungsbeispiel der Spezifikation M 2,5. Der Gewindedurchmesser der ersten Gehäusedurchbrechungen 32 entspricht beim Ausführungsbeispiel der Spezifikation M 3, sodass sich, wie erwähnt, der Gewindeschaft 35 ohne Schraubvorgang durchstecken lässt.

Um nun einen Linearantrieb 10 von der Schlittenseite her an einer Befestigungsplatte 23 zu fixieren, wird der Linearantrieb 10 mit der dem Schlitten 17 entgegengesetzten Unterseite 36 des Antriebsgehäuses 2 an eine Befestigungsplatte 23 angesetzt, die über mit den ersten Gehäusedurchbrechungen 32 fluchtende plattenseitige Gewindebohrungen 37 verfügt, deren Gewindedurchmesser demjenigen des Gewindeschaftes 35 und mithin auch demjenigen der zweiten Schlittendurchbrechungen 29 entspricht. Zur Befestigung wird der Linearantrieb 10 so auf der Befestigungsplatte 23 positioniert, dass die ersten Gehäusedurchbrechungen 32 mit den plattenseitigen Gewindebohrungen 37 fluchten, wonach eine gewünschte Anzahl erster Befestigungsschrauben 34 mit ihrem Gewindeschaft 35 voraus durch die in der Montageposition befindlichen ersten Schlittendurchbrechungen 28 hindurchgeführt und in die erste Gehäusedurchbrechung 32 eingesteckt werden. Der dabei durch die erste Gehäusedurchbrechung 32 hindurchgreifende Gewindeschaft 35 wird dann in die plattenseitigen Gewindebohrungen 37 eingeschraubt. Da sich der Kopf 38 der ersten Befestigungsschrauben 34 an der dem Schlitten 17 zugewandten Oberseite des Antriebsgehäuses 2 abstützt, kann mithin das Antriebsgehäuse 2 fest mit der Befestigungsplatte 23 verspannt werden.

Es versteht sich, dass in diesem Zusammenhang der Durchmesser der ersten Schlittendurchbrechungen 28 wenigstens so groß gewählt ist, dass der Kopf 38 der ersten Befestigungsschraube 34 hindurchpasst. Der Vorgang des Hindurchführens einer ersten Befestigungsschraube 34 durch eine erste Schlittendurchbrechung 28 ist in Fig. 5 strichpunktiert bei 34' angedeutet.

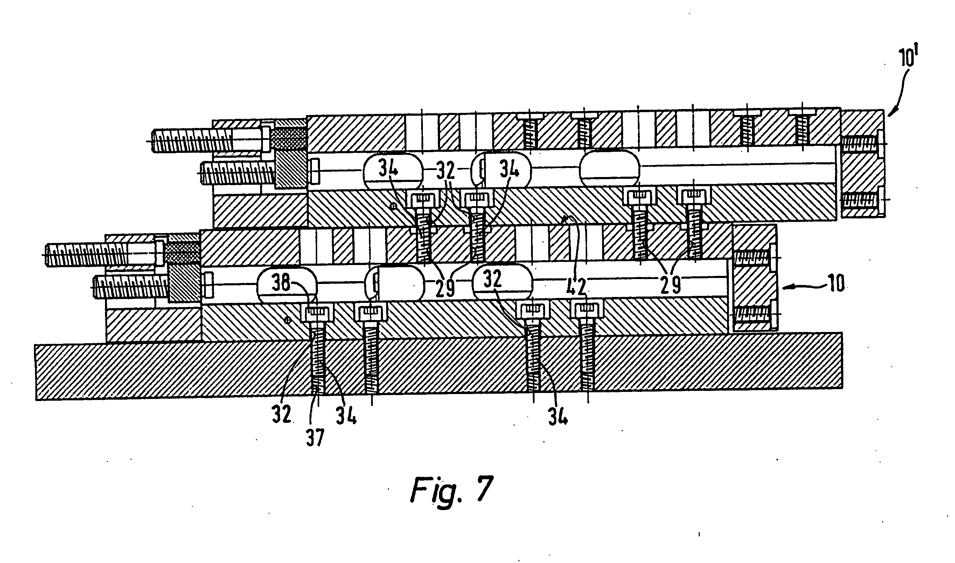

In vergleichbarer Weise können zwei der erfindungsgemäßen Linearantriebe huckepackartig aneinander angebaut werden, um eine Linearantriebs-Baugruppe zu erhalten. Exemplarisch zeigen hierzu die Fig. 6 und 7 den Anbau eines Linearantriebes 10' an den Schlitten des an der Befestigungsplatte 23 befestigten Linearantriebes 10.

Hierbei wird der eine Linearantrieb 10' mit der Unterseite seines Antriebsgehäuses 2 voraus an die Oberseite 42 des Schlittens 17 des an der Befestigungsplatte 23 angeordneten anderen Linearantriebes 10 so angesetzt, dass die ersten Gehäusedurchbrechungen 32 seines Antriebsgehäuses 2 mit den zweiten Schlittendurchbrechungen 29 des Schlittens 17 des anderen Linearantriebes 10 fluchten. In ihrer Funktion entsprechen dabei die zweiten Schlittendurchbrechungen 29 derjenigen der plattenseitigen Gewindebohrungen 37, wobei erste Befestigungsschrauben 34 durch die in der Montageposition befindlichen ersten Schlittendurchbrechungen 28 hindurchgeführt und anschließend über die ersten Gehäusedurchbrechungen 32 hinweg mit den zweiten Schlittendurchbrechungen 29 des anderen Linearantriebes 10 verschraubt werden.

Theoretisch könnten auf diese Weise auch mehr als zwei Linearantriebe mit zueinander paralleler Längsausrichtung aneinander angebaut werden.

Ein Vergleich der Fig. 6 und 7 macht deutlich, dass sich zwei Linearantriebe 10, 10' bei Bedarf in unterschiedlichen axialen Relativlagen aneinander fixieren lassen. Die Variabilität ergibt sich daraus, dass das Antriebsgehäuse 2 über mehrere axial beabstandete Gruppen erster Gehäusedurchbrechungen 32 verfügt, wie auch der Schlitten 17 mehrere axial beabstandete Gruppen zweiter Schlittendurchbrechungen 29 aufweist, die selektiv zueinander ausrichtbar sind, sodass sich im montierten Zustand ein unterschiedlicher Axialversatz zwischen den aneinander befestigten Linearantrieben 10, 10' ergibt.

Ersichtlich besteht die Möglichkeit, mehrere Linearantriebe 10, 10' huckepackartig zu einer Baugruppe zusammenzufassen, indem sie ohne zwischengefügte Adapterplatte direkt aneinander angebaut werden können. Hierbei genügt es und ist auch zweckmäßig, wenn am Antriebsgehäuse 2 und am Schlitten 17 jeweils nur eine Durchbrechungsreihe 24, 26 vorgesehen ist, wobei diese Durchbrechungsreihen jeweils breitenmittig im Antriebsgehäuse 2 und/oder im Schlitten 17 angeordnet sein können.

Wie aus Fig. 4 hervorgeht, kann ein Linearantrieb 10 alternativ auch in einer Weise mit einer Befestigungsplatte 23 verschraubt werden, bei der zweite Befestigungsschrauben 43 von der dem Linearantrieb 10 entgegengesetzten Unterseite der Befestigungsplatte 23 her durch diese hindurchgeführt werden. In diesem Fall verwendet man eine Befestigungsplatte 23, die über plattenseitige Durchbrechungen 44 verfügt, die gewindelos ausgebildet sein können und die auf jeden Fall ohne Gewindeeingriff das Hindurchführen des Gewindeschaftes 45 der zweiten Befestigungsschrauben 43 ermöglichen, wobei der Gewindedurchmesser dieses Gewindeschaftes 45 demjenigen der ersten Gehäusedurchbrechungen 32 entspricht. Sind letztere fluchtend mit den plattenseitigen Durchbrechungen 44 ausgerichtet, können die zweiten Befestigungsschrauben 43 von der dem Linearantrieb 10 entgegengesetzten Seite her durch die Befestigungsplatte 23 hindurchgeführt und in die ersten Gehäusedurchbrechungen 32 eingeschraubt werden. Entsprechend der beim Ausführungsbeispiel vorhandenen Gewindespezifikation für die ersten Gehäusedurchbrechungen 32 werden exemplarisch zweite Befestigungsschrauben 43 verwendet, deren Gewinde ebenfalls der Spezifikation M 3 entspricht.

Während bei der Ausführungsform der Fig. 4 bis 8 für die unterschiedliche Montageart der Befestigungsplatte 23 auf erste und zweite Befestigungsschrauben 34, 43 unterschiedlicher Gewindedurchmesser zurückgegriffen werden muss, ermöglicht die Bauform der Fig. 9 bis 13 eine vergleichbar variable Befestigungsplattenmontage unter Verwendung von Befestigungsschrauben identischer Gewindespezifikation, wobei - sofern es die Dicke der Befestigungsplatte 23 zulässt - sogar auf völlig identische Befestigungsschrauben zurückgegriffen werden kann. Zur besseren Unterscheidung seien diese mit dem gleichen Gewindedurchmesser ausgestatteten Befestigungsschrauben als dritte Befestigungsschrauben 46 bezeichnet. Im Einzelnen sind bei dieser vorteilhaften Ausführungsvariante die schon erwähnten zweiten Gehäusedurchbrechungen 33 als Gewindebohrungen ausgebildet, deren Gewindedurchmesser demjenigen der zweiten Schlittendurchbrechungen 29 entspricht. Der Durchmesser der ersten Gehäusedurchbrechungen 32 ist demgegenüber größer und wenigstens so groß, dass sich der Gewindeschaft 45 der dritten Befestigungsschraube 46, dessen Gewindedurchmesser demjenigen der zweiten Gehäusedurchbrechung 33 entspricht, ohne Gewindeeingriff hindurchstecken lässt. Da die ersten Gehäusedurchbrechungen 32 bei dieser Ausführungsform lediglich das Hindurchstecken der dritten Befestigungsschrauben 46 ermöglichen sollen, können sie, wie abgebildet, gewindelos ausgebildet sein.

Die Montage eines Linearantriebes 10 auf einer Befestigungsplatte 23 kann vergleichbar den Fig. 4 bis 8 wiederum wahlweise dadurch vorgenommen werden, dass die dritten Befestigungsschrauben 46 entweder durch den Schlitten 17 hindurch eingesetzt werden oder von der dem Linearantrieb 10 entgegengesetzten Unterseite der Befestigungsplatte 23 her. Ersteres geschieht gemäß Fig. 10 bis 13 in identischer Weise wie zu den Fig. 5 bis 8 beschrieben, wobei die dritten Befestigungsschrauben 46 im montierten Zustand durch die gewindelosen ersten Gehäusedurchbrechungen 32 hindurchragen und mit ihrem Gewindeschaft 45 in plattenseitige Durchbrechungen 47 eingeschraubt sind, die als Gewindebohrungen mit dem gleichen Gewindedurchmesser wie die Gewindeschäfte 45 ausgeführt sind. Die Schraubenköpfe 48 stützen sich hierbei an der in Richtung der Hochachse 18 dem Schlitten 17 zugewandten Oberseite 42 des Antriebsgehäuses 2 ab, wobei die ersten Gehäusedurchbrechungen 32 - wie im Übrigen auch bei den Ausführungsbeispielen der Fig. 4 bis 8 - über einen erweiterten Endabschnitt 52 verfügen können, der den zugeordneten Schraubenkopf 48 versenkt aufnimmt.

Um einen Linearantrieb 10 gemäß Fig. 9 von der Befestigungsplatte 23 her fixieren zu können, verfügt die Befestigungsplatte 23 über plattenseitige Durchbrechungen 47', deren Durchmesser größer ist als der Gewindedurchmesser des Gewindeschafts 45 der dritten Befestigungsschraube 46, sodass sich letztere mit ihrem Gewindeschaft 45 voraus ohne Gewindeeingriff hindurchstecken und in eine fluchtende zweite Gehäusedurchbrechung 33 einschrauben lässt.

Da für die beiden Befestigungsarten erste und zweite Gehäusedurchbrechungen 32, 33 mit unterschiedlichem Durchmesser vorgesehen sind, kann in beiden Fällen auf dritte Befestigungsschrauben 46 mit gleichem Gewindedurchmesser zurückgegriffen werden.

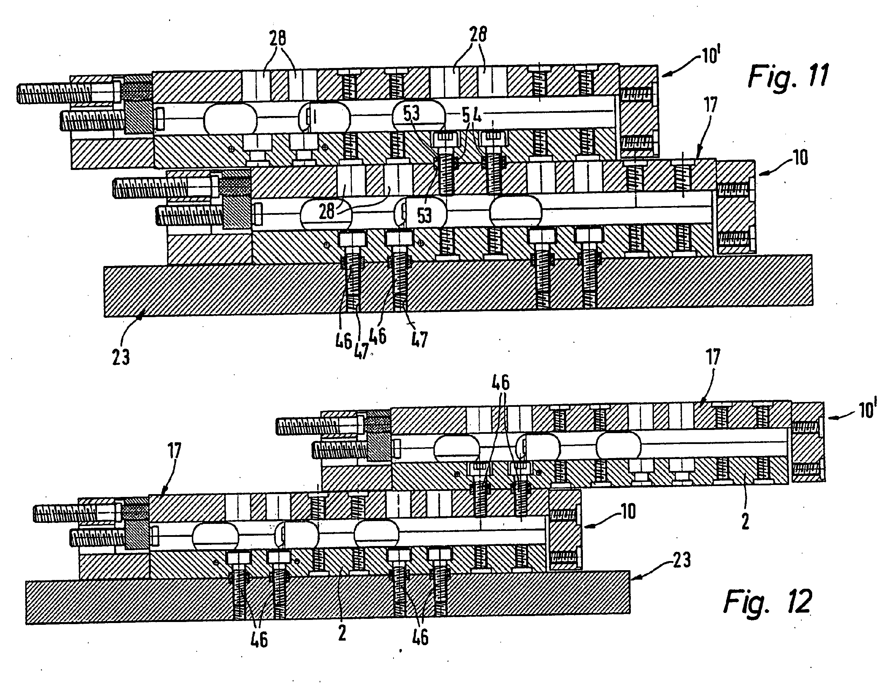

Um einen Linearantrieb 10' gemäß Fig. 11 und 12 huckepackartig auf dem Schlitten 17 eines anderen Linearantriebes 10 zu befestigen, greift man gemäß Fig. 11 und 12 auf die in Fig. 10 offenbarte Befestigungsart zurück, wobei nun die zweiten Schlittendurchbrechungen 29 an die Stelle der als Gewindebohrungen ausgebildeten plattenseitigen Durchbrechungen 47 treten, sodass eine direkte Schraubverbindung möglich ist.

Wiederum besteht auch hier die Möglichkeit, die beiden Linearantriebe 10, 10' in Richtung der Hauptachse 1 in unterschiedlichen Relativpositionen aneinander zu befestigen.

Um bei der gegenseitigen Montage zweier Linearantriebe 10, 10' eine präzise Ausrichtung zu erhalten, können bei allen Ausführungsbeispielen die zweiten Schlittendurchbrechungen 29 an der vom Antriebsgehäuse 2 abgewandten Stirnseite sowie die ersten und zweiten Gehäusedurchbrechungen 32, 33 an der vom Schlitten 17 abgewandten Stirnseite über jeweils eine konzentrische Zentriererweiterung 53 verfügen. In die im aneinander angesetzten Zustand zweier Linearantriebe 10, 10' miteinander fluchtenden Zentriererweiterungen 53 des Antriebsgehäuses 2 und des Schlittens 17 kann dann jeweils eine Zentrierhülse 54 eingesetzt werden, die in beide Bauteile formschlüssig eingreift, sodass sich rechtwinkelig zur Hochachse 18 eine formschlüssige Fixierung ergibt. Der Innendurchmesser der Zentrierhülsen 54 ist so ausgebildet, dass die zugeordnete Befestigungsschraube ohne Gewindeeingriff hindurchsteckbar ist.

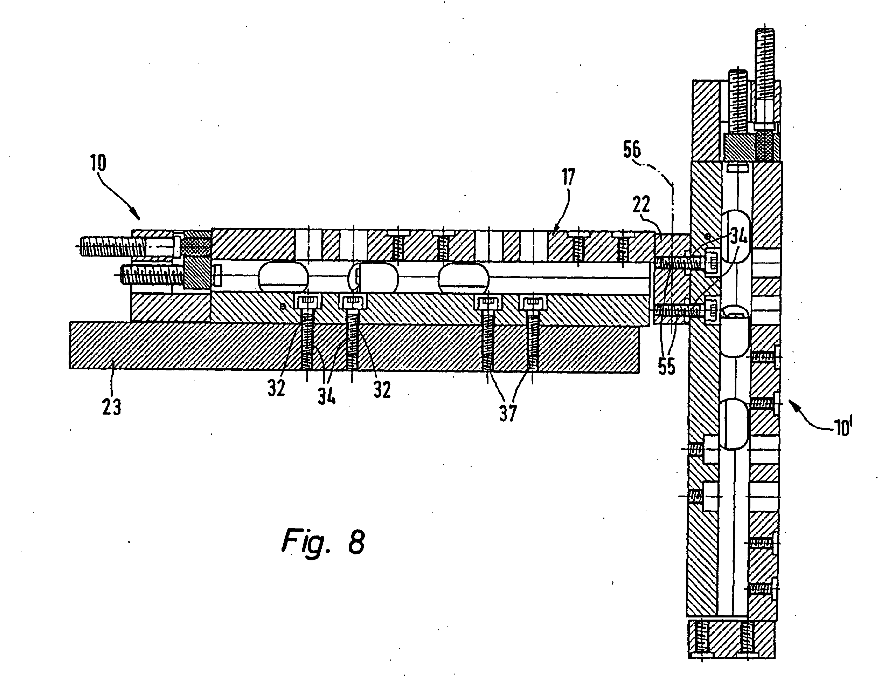

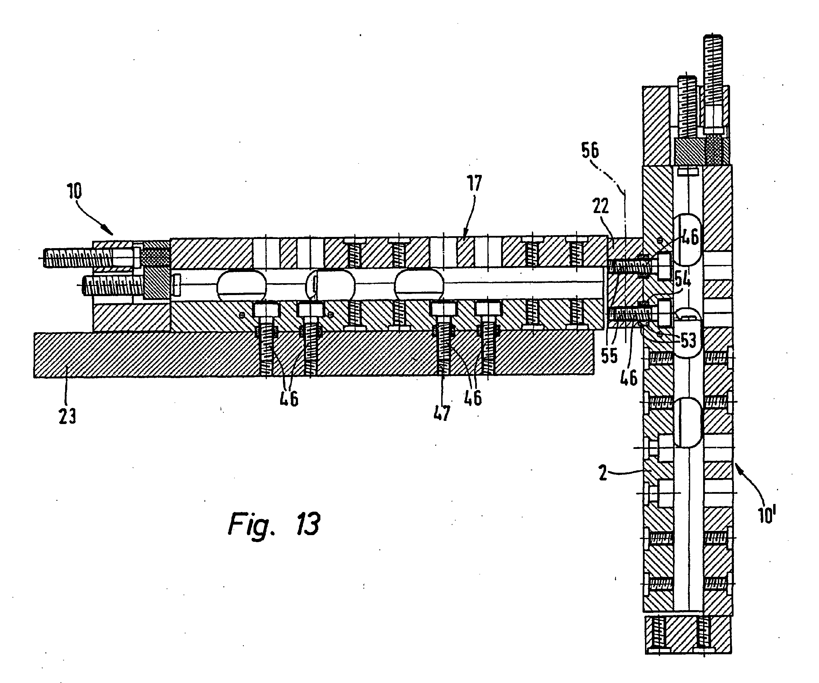

Zweckmäßigerweise sind an der axial vom Antriebsgehäuse 2 wegweisenden Stirnseite des ein Kopfstück des Schlittens 17 bildenden Verbindungsjoches 22 wenigstens zwei in Richtung der Hauptachse ausgerichtete kopfseitige Gewindebohrungen 55 vorgesehen, die versetzt zueinander auf einer zur Hochachse parallelen Linie 56 liegen und deren in Richtung dieser Linie 56 gemessener Abstand zueinander dem Abstand zweier erster Gehäusedurchbrechungen des Linearantriebes 10, 10' entspricht. Der Gewindedurchmesser dieser kopfseitigen Gewindebohrungen 55 entspricht demjenigen der zweiten Schlittendurchbrechungen 29. Auf diese Weise kann gemäß Fig. 8 und 13 ein Linearantrieb 10' mit der Unterseite seines Antriebsgehäuses 2 voraus an die Stirnfläche des Kopfstückes 22 angesetzt und dort vergleichbar den Fig. 5 und 10 mittels zweier erster (34) bzw. zweier dritter (46) Befestigungsschrauben angeschraubt werden. Die Hauptachse des angesetzten Linearantriebes 10' verläuft dann rechtwinkelig zu derjenigen des anderen Linearantriebes 10, sodass Bewegungen in einem x-y-Koordinatensystem realisierbar sind.

Wie aus Fig. 13 hervorgeht, kann auch bei der Verbindung zwischen einem Linearantrieb 10' und einem Kopfstück bzw. Verbindungsjoch 22 auf Zentrierhülsen 54 zur gegenseitigen Lagezentrierung zurückgegriffen werden. In diesem Falle weisen auch die kopfseitigen Gewindebohrungen 55 im stirnseitigen Bereich eine zur Aufnahme der Zentrierhülse 54 geeignete Zentriererweiterung 53 auf.

## Patentansprüche

1. Linearantrieb, mit einem Antriebsgehäuse (2) und einem diesbezüglich in Richtung einer Hauptachse (1) verstellbar geführten Schlitten (17), wobei der Schlitten (17) mit wenigstens einem Teil seiner Länge in Richtung einer Hochachse (18) neben dem Antriebsgehäuse (2) angeordnet ist und mindestens eine lineare schlittenseitige Durchbrechungsreihe (24) mit in Richtung der Hauptachse (1) zueinander beabstandeten ersten Schlittendurchbrechungen (28) aufweist, und wobei das Antriebsgehäuse (2) mindestens eine lineare gehäuseseitige Durchbrechungsreihe (26) mit in Richtung der Hauptachse (1) zueinander beabstandeten ersten Gehäusedurchbrechungen (32) aufweist, die durch entsprechende Positionierung des Schlittens (17) so in eine in der Richtung der Hochachse (18) mit jeweils einer ersten Schlittendurchbrechung (28) fluchtende Montageposition bringbar sind, dass zur Befestigung des Linearantriebes dienende Befestigungsschrauben (34, 46) vollständig durch die ersten Schlittendurchbrechungen (28) hindurchführbar und in die ersten Gehäusedurchbrechungen (32) einsetzbar sind, **dadurch gekennzeichnet, dass** die schlittenseitige Durchbrechungsreihe (24) zusätzlich zu den ersten Schlittendurchbrechungen (28) als Gewindebohrungen ausgebildete zweite Schlittendurchbrechungen (29) aufweist, die das Einschrauben von Befestigungsschrauben (34, 46) ermöglichen, welche in die ersten Gehäusedurchbrechungen (32) eines mit seinem Antriebsgehäuse (2) voraus huckepackartig direkt an den Schlitten (17) angesetzten weiteren gleichartigen Linearantriebes durch dessen erste Schlittendurchbrechungen (28) hindurch eingesetzt sind.

2. Linearantrieb nach Anspruch 1, **dadurch gekennzeichnet, dass** die ersten Schlittendurchbrechungen (28) gewindelos ausgebildet sind.

3. Linearantrieb nach Anspruch 1 oder 2, **dadurch gekennzeichnet, dass** die ersten und zweiten Schlittendurchbrechungen (28, 29) gruppenweise alternierend aufeinanderfolgend angeordnet sind.

4. Linearantrieb nach einem der Ansprüche 1 bis 3, **dadurch gekennzeichnet, dass** die ersten und zweiten Schlittendurchbrechungen (28, 29) jeweils paarweise abwechselnd aufeinanderfolgend angeordnet sind.

5. Linearantrieb nach einem der Ansprüche 1 bis 4, **dadurch gekennzeichnet, dass** die ersten Gehäusedurchbrechungen (32) als Gewindebohrungen ausgebildet sind, deren Gewindedurchmesser so groß ist, dass ohne Gewindeeingriff der Gewindeschaft (35, 45) einer Befestigungsschraube (34, 43) durchsteckbar ist, dessen Gewindedurchmesser demjenigen der zweiten Schlittendurchbrechungen (29) entspricht.

6. Linearantrieb nach einem der Ansprüche 1 bis 4, **dadurch gekennzeichnet, dass** innerhalb der gehäuseseitigen Durchbrechungsreihe (26) zusätzlich zu den ersten Gehäusedurchbrechungen (32) zweite Gehäusedurchbrechungen (33) vorgesehen sind, wobei die zweiten Gehäusedurchbrechungen (33) als Gewindebohrungen ausgebildet sind, deren Gewindedurchmesser demjenigen der zweiten Schlittendurchbrechungen (29) entspricht, und wobei der Durchmesser der ersten Gehäusedurchbrechungen (32) so groß ist, dass der Gewindeschaft (35, 45) einer Befestigungsschraube (34, 43), dessen Gewindedurchmesser demjenigen der zweiten Gehäusedurchbrechung (33) entspricht, ohne Gewindeeingriff durchsteckbar ist.

7. Linearantrieb nach Anspruch 6, **dadurch gekennzeichnet, dass** die ersten Gehäusedurchbrechungen (32) gewindelos ausgebildet sind.

8. Linearantrieb nach einem der Ansprüche 1 bis 7, **dadurch gekennzeichnet, dass** in einer bestimmten Schlittenposition sämtliche ersten Schlittendurchbrechungen (28) mit ersten Gehäusedurchbrechungen (32) fluchten.

9. Linearantrieb nach einem der Ansprüche 1 bis 8, **dadurch gekennzeichnet, dass** innerhalb der gehäuseseitigen Durchbrechungsreihe (26) mindestens eine Gruppe aus wenigstens zwei unmittelbar aufeinanderfolgenden ersten Gehäusedurchbrechungen (32) vorhanden ist.

10. Linearantrieb nach einem der Ansprüche 1 bis 9, **dadurch gekennzeichnet, dass** der Schlitten (17) ein Kopfstück (22) aufweist, an dessen Stirnseite wenigstens zwei auf einer zur Hochachse (18) parallelen Linie (56) liegende und jeweils in Richtung der Hauptachse (1) ausgerichtete Gewindebohrungen (55) vorgesehen sind, deren Abstand zueinander dem Abstand zweier erster Gehäusedurchbrechungen (32) entspricht und deren Gewindedurchmesser mit demjenigen der zweiten Schlittendurchbrechungen (29) übereinstimmt, insbesondere derart, dass ein weiterer gleichartiger Linearantrieb mit rechtwinkeliger Ausrichtung anschraubbar ist.

11. Linearantrieb nach einem der Ansprüche 1 bis 10, **dadurch gekennzeichnet, dass** wenigstens die schlittenseitige Durchbrechungsreihe (24) breitenmittig im Schlitten (17) ausgebildet ist.

12. Linearantrieb nach einem der Ansprüche 1 bis 11, **dadurch gekennzeichnet, dass** die zweiten Schlittendurchbrechungen (29) an der vom Antriebsgehäuse (2) abgewandten Stirnseite und die ersten Gehäusedurchbrechungen (32) an der vom Schlitten (17) abgewandten Stirnseite jeweils eine konzentrische Zentriererweiterung (53) zum Einsetzen einer Zentrierhülse (54) aufweisen.

13. Linearantrieb nach Anspruch 12, **dadurch gekennzeichnet, dass** auch die zweiten Gehäusedurchbrechungen (33) an der vom Schlitten (17) abgewandten Stirnseite eine konzentrische Zentriererweiterung (53) aufweisen.

14. Linearantrieb nach einem der Ansprüche 1 bis 13, **dadurch gekennzeichnet, dass** das Antriebsgehäuse (2) einen längsverlaufenden Antriebsraum (3) beinhaltet, in dem sich zu einer Linearbewegung antreibbare Antriebsmittel (4) befinden, die mit dem außen am Antriebsgehäuse (2) linear verstellbar geführten Schlitten (17) antriebsmäßig gekoppelt sind.

## Claims

1. Linear drive, with a drive housing (2) and a slide (17), adjustably guided with regard to the former in the direction of a main axis (1), wherein the slide (17) is mounted with at least part of its length in the direction of a vertical axis (18) next to the drive housing (2) and has at least one linear slide-side row of openings (24) with first slide openings (28) spaced apart in the direction of the main axis (1), and wherein the drive housing (2) has at least one linear housing-side row of openings (26) with first housing openings (32) spaced apart in the direction of the main axis (1) and which, through suitable positioning of the slide (17), may be brought into an assembly position flush with each first slide opening (28) in the direction of the vertical axis (18) in such a way that mounting screws (34, 46) serving to fasten the linear drive may be guided completely through the first slide openings (28) and inserted in the first housing openings (32), **characterised in that** the slide-side row of openings (24) has, in addition to the first slide openings (28), second slide openings (29) in the form of tapped holes which allow the screwing in of mounting screws (34, 46) which are inserted into the first housing openings (32) of a further identical linear drive attached directly to the slide (17) in piggy-back manner with its drive housing (2) leading, and through its first slide openings (28).

2. Linear drive according to claim 1, **characterised in that** the first slide openings (28) are unthreaded.

3. Linear drive according to claim 1 or 2, **characterised in that** the first and second slide openings (28, 29) are arranged in alternating consecutive groups.

4. Linear drive according to any of claims 1 to 3, **characterised in that** the first and second slide openings (28, 29) are arranged in alternating consecutive pairs.

5. Linear drive according to any of claims 1 to 4, **characterised in that** the first housing openings (32) are in the form of tapped holes with a thread diameter large enough for the threaded shank (35, 45) of a mounting screw (34, 43), the thread diameter of which corresponds to that of the second slide openings (29), to be inserted without threaded engagement.

6. Linear drive according to any of claims 1 to 4, **characterised in that** within the housing-side row of openings (26), second housing openings (33) are provided in addition to the first housing openings (32), with the second housing openings (33) being in the form of tapped holes with a thread diameter corresponding to that of the second slide openings (29), and wherein the diameter of the first housing openings (32) is large enough for the threaded shank (35, 45) of a mounting screw (34, 43), the thread diameter of which corresponds to that of the second housing opening (33), to be inserted without threaded engagement.

7. Linear drive according to claim 6, **characterised in that** the first housing openings (32) are unthreaded.

8. Linear drive according to any of claims 1 to 7 **characterised in that**, in a certain slide position, all first slide openings (28) are aligned with first housing openings (32).

9. Linear drive according to any of claims 1 to 8 **characterised in that**, within the housing-side row of openings (26), there is at least one group of at least two consecutive first housing openings (32).

10. Linear drive according to any of claims 1 to 9, **characterised in that** the slide (17) has a head end (22) on the end face of which are provided at least two tapped holes (55), lying on a line (56) parallel to the vertical axis (18) and each aligned in the direction of the main axis (1), at a distance from one another corresponding to the spacing of the first housing openings (32) and with a thread diameter coinciding with that of the second slide openings (29), in particular so that a further identical linear drive may be screwed on with rectangular alignment.

11. Linear drive according to any of claims 1 to 10, **characterised in that** at least the slide-side row of openings (24) is formed in the centre of the width of the slide (17).

12. Linear drive according to any of claims 1 to 11, **characterised in that** the second slide openings (29), on the end face facing away from the drive housing (2), and the first housing openings (32), on the end face facing away from the slide (17), each have a concentric centring enlargement (53) for the insertion of a centring sleeve (54).

13. Linear drive according to claim 12, **characterised in that** the second housing openings (33) also have a concentric centring enlargement (53) on the end face facing away from the slide (17).

14. Linear drive according to any of claims 1 to 13. **characterised in that** the drive housing (2) contains a longitudinally running drive chamber (3), in which are mounted drive means (4) which may be driven to perform a linear movement, and which are coupled for drive purposes to the slide (17) which is linearly and adjustably guided on the outside of the drive housing (2).

## Revendications

1. Entraînement linéaire avec un boîtier d'entraînement (2) et avec un chariot (17) monté mobile par rapport à ce dernier dans la direction d'un axe principal (1), le chariot (17) étant disposé avec au moins une partie de sa longueur, dans la direction d'un axe vertical (18), sur le côté du boîtier d'entraînement (2) et comportant au moins une rangée linéaire d'évidements (24) côté chariot, avec des premiers évidements de chariot (28) espacés entre eux dans la direction de l'axe principal (1) et le boîtier d'entraînement (2) comportant au moins une rangée linéaire d'évidements (26) côté chariot avec des premiers évidements du boîtier (32) espacés entre eux dans la direction de l'axe principal (1), qui par un positionnement correspondant du chariot (17) peuvent être amenés en position de montage alignée sur respectivement un premier évidement de chariot dans la direction de l'axe vertical (18), pour que des vis de fixation (34, 46) destinées à visser l'entraînement linéaire puissent être insérées entièrement à travers les premiers évidements de chariot (28) et dans les premiers évidements du boîtier (32), **caractérisé en ce que** la rangée d'évidements côté chariot (24) comporte, en supplément des premiers évidements du chariot (28), des deuxièmes évidements du chariot (29) conçus sous la forme de taraudages qui permettent de visser des vis de fixation (34, 46) qui sont insérées dans les premiers évidements du boîtier (32) d'un autre entraînement linéaire de type similaire avec son boîtier d'entraînement (2) préalablement monté de façon gigogne directement sur le chariot (17), à travers ses premiers évidements du chariot (28).

2. Entraînement linéaire selon la revendication 1, **caractérisé en ce que** les premiers évidements du chariot (28) sont conçus sans taraudage.

3. Entraînement linéaire selon la revendication 1 ou 2, **caractérisé en ce que** les premiers et les deuxièmes évidements du chariot (28, 29) sont disposés par groupes, qui se suivent de façon alternée.

4. Entraînement linéaire selon l'une des revendications 1 à 3, **caractérisé en ce que** les premiers et les deuxièmes évidements du chariot (28, 29) sont respectivement disposés par paires, qui se suivent de façon alternée.

5. Entraînement linéaire selon l'une des revendications 1 à 4, **caractérisé en ce que** les premiers évidements du boîtier (32) sont conçus sous la forme de taraudages, dont les diamètres de taraudage sont assez grands pour permettre d'insérer une vis de fixation (34, 43) dont le diamètre de filetage correspond aux deuxièmes évidements du chariot (29), sans engagement du filet de la tige filetée (34, 35).

6. Entraînement linéaire selon l'une des revendications 1 à 4, **caractérisé en ce que** dans la rangée des évidements (26) côté boîtier, en supplément des premiers évidements du boîtier (32), sont prévus des deuxièmes évidements du boîtier (33), les deuxièmes évidements du boîtier (33) étant conçus sous la forme de taraudages, dont le diamètre de taraudage correspond à celui des deuxièmes évidements du chariot (29), et le diamètre des premiers évidements du boîtier (32) étant assez grand pour que la tige filetée (35, 45) d'une vis de fixation (34, 43), dont le diamètre du filet correspond à celui des deuxièmes évidements du boîtier (33), puisse être insérée sans engagement de son filet.

7. Entraînement linéaire selon la revendication 6, **caractérisé en ce que** les premiers évidements du boîtier (32) sont conçus sans taraudage.

8. Entraînement linéaire selon l'une des revendications 1 à 7, **caractérisé en ce que** dans une position déterminée du chariot, tous les premiers évidements du chariot (28) sont alignés sur des premiers évidements du boîtier (32).

9. Entraînement linéaire selon l'une des revendications 1 à 8, **caractérisé en ce que** dans la rangée des évidements côté boîtier (26) se trouve au moins un groupe constitué d'au moins deux premiers évidements de boîtier (32) directement consécutifs.

10. Entraînement linéaire selon l'une des revendications 1 à 9, **caractérisé en ce que** le chariot (17) comporte un élément de tête (22) sur la face frontale duquel sont prévus au moins deux taraudages (55) situés sur une ligne (56) parallèle à l'axe vertical (18) et respectivement orientés dans la direction de l'axe principal (1), dont la distance mutuelle correspond à la distance entre deux premiers évidements du boîtier (32) et dont le diamètre de taraudage coïncide avec celui des deuxièmes évidements du chariot (29), notamment de façon à permettre d'y visser en entraînement linéaire similaire supplémentaire avec une orientation à angle droit.

11. Entraînement linéaire selon l'une des revendications 1 à 10, **caractérisé en ce qu'**au moins la rangée d'évidements côté chariot (24) est formée au centre de la largeur du chariot (17).

12. Entraînement linéaire selon l'une des revendications 1 à 11, **caractérisé en ce que** les deuxièmes évidements du chariot (29) comportent sur la face frontale opposée au boîtier d'entraînement (2), et les premiers évidements du boîtier (32) comportent sur la face frontale opposée au chariot (17), respectivement un élargissement de centrage concentrique (53), prévu pour insérer une douille de centrage (54).

13. Entraînement linéaire selon la revendication 12, **caractérisé en ce qu'**également les deuxièmes évidements du boîtier (33) comportent sur la face frontale opposée au chariot (17) un élargissement de centrage concentrique (53).

14. Entraînement linéaire selon l'une des revendications 1 à 13, **caractérisé en ce que** le boîtier d'entraînement (2) contient une chambre d'entraînement (3) s'étendant en longueur, dans laquelle se trouvent des moyens d'entraînement (4) pouvant être entraînés en un déplacement linéaire, qui sont couplés en entraînement avec le chariot (17) monté de façon linéairement mobile sur l'extérieur du boîtier d'entraînement (2).
